# EUROPEAN PATENT SPECIFICATION

(11) **EP 3 715 163 B1**
(45) Date of publication and mention of the grant of the patent: **15.02.2023**
(21) Application number: 19020237.4
(22) Date of filing: 29.03.2019
(51) Int. Cl.: B60K 35/00, B60K 37/06, B60K 37/02

(54) **DIGITAL DASHBOARD FOR A VEHICLE AND VEHICLE HAVING SUCH DASHBOARD**
DIGITALES ARMATURENBRETT FÜR EIN FAHRZEUG UND FAHRZEUG MIT DIESEM ARMATURENBRETT
TABLEAU DE BORD NUMÉRIQUE POUR UN VÉHICULE ET VÉHICULE ÉQUIPÉ D'UN TEL TABLEAU DE BORD

(43) Date of publication of application: 30.09.2020
(73) Proprietor: Dr.Ing. h.c. F. Porsche Aktiengesellschaft, 70435 Stuttgart (DE)
(72) Inventor: Seehaus, Timo, 71638 Ludwigsburg (DE); Hornung, Moritz, 71277 Rutesheim (DE); Dreharov, Nikolay, 71638 Ludwigsburg (DE); Herrmann, Simeon, 71638 Ludwigsburg (DE)

(56) References cited:
- DE-A1-102014 118 957
- US-A1- 2017 269 364
- Mahmudin Ashar: "Basic Guide for Linux Mint Cinnamon File Manager (Nemo)", , 21 May 2016 (2016-05-21), XP055603086, Retrieved from the Internet: URL:https://web.archive.org/web/2016052112 5243/http://www.ubuntubuzz.com/2015/10/bas ic-guide-for-nemo-file-manager.html [retrieved on 2019-07-08]

## Description

The present invention pertains to a digital dashboard for a vehicle. The invention further relates to a corresponding vehicle.

### Background art

Throughout the automotive industry, by electronic instrument cluster, virtual cockpit, digital instrument panel, digital dashboard, or digital dash is meant a set of instrumentation that is displayed with a digital readout rather than through analog gauges. In state-of-the-art digital dashboards, traditional readouts such as a speedometer have been augmented by software-powered display panels conveying information through visual elements. Such digital instruments present data in the form of numeric parameters, textual messages, or graphical gauges. Compared to electro-mechanical instrument clusters, these interactive displays are highly versatile and flexible.

DE102014016934A1 discloses a virtual cockpit for a car wherein information is emphasized through size adjustments depending on the driving speed of the car with the aim of minimizing distraction of the driver.

US20140375447A1 pertains to a context-aware in-vehicle dashboard system capable of determining and adapting vehicle states and context using a variety of both vehicle-based and non-vehicle-based data sources. The system presents different information and notifications based on the vehicle state and the category or priority of the information or notifications, respectively. "Vehicle state" in that context is meant to encompass whether the vehicle is in motion, stationary in traffic, or stationary in park. Data sources include the vehicle's engine state, speed, proximity to a traffic signal junction or a parking lot, and gear state of the vehicle's transmission.

DE 10 2014 118957 A1 discloses a digital dashboard for a vehicle having a control for adjusting the amount of information furnished by the dashboard.

US 2017/269364 A1 discloses a head-up display device for a vehicle, configured to reduce a number of pieces of information displayed as the travelling speed of the vehicle increases. A basic guide for a file manager having a zoom slider for adjusting the amount of information furnished by its user interface may be retrieved from the Internet:
URL:https://web.archive.org/web/20160521125243/
http://www.ubuntubuzz.com/2015/10/basic-guide-for-nemo-file-manager.html [retrieved on 2019-07-08].

### Disclosure of the invention

The invention provides a digital dashboard for a vehicle and a corresponding vehicle as per the independent claims.

Embodiments of the invention are set out in the dependent claims.

### Brief description of drawings

Figure 1 is a perspective view of a digital dashboard as per the invention.
Figure 2 is a context-sensitive touch slider used to control information density.

### Embodiment of the invention

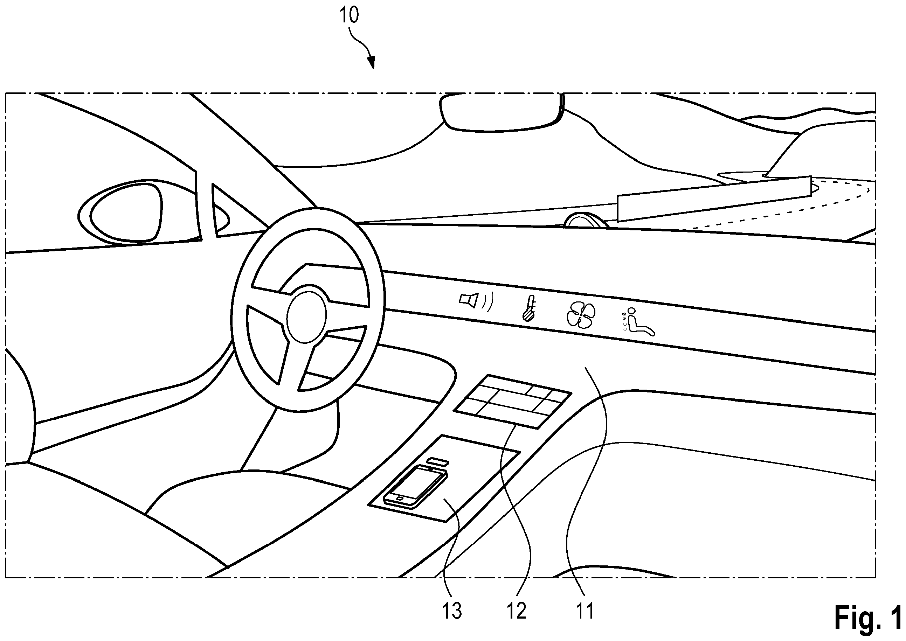

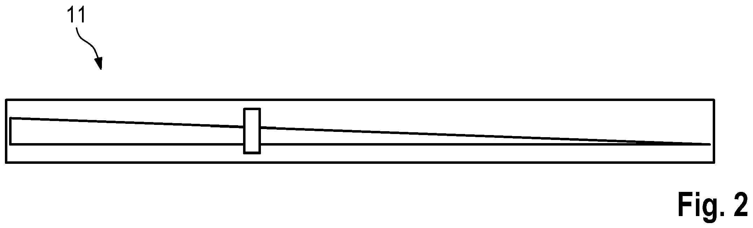

Figure 1 illustrates crucial elements of the digital dashboard of a car. An essential control (11) is elucidated in Figure 2 and serves to counteract driver distraction by adjusting the number of visual elements, notifications, and other information.

In the present embodiment, a sliding control (11) is configured to be set manually and automatically depending on a speed of a vehicle thus equipped and in addition optionally on a driver's stress level, or a degree of automation, or an application scenario of the vehicle. For instance, scenarios such as a traffic jam, (semi-)autonomous driving, or convoy driving on a highway may permit ample content pertaining to entertainment, exploration, suggestions, gamification, community, or augmented points of interest (POI). In comparison, a daily commute, city, or backroad travel may call for reduced verbosity, with only navigation, media control, driving-related services, text-to-speech, or speech-to-text conversion remaining active. Finally, during race track or high-speed manual driving on a highway, the amount of information furnished by the dashboard is limited to absolute essentials such as driving-related technical information or statistics.

## Claims

1. Digital dashboard for a vehicle (10), having
- a manual control (11) configured to adjust an amount of information furnished by the dashboard,
wherein
- the manual control (11) is adapted to be set automatically depending on a traveling speed of the vehicle such that at high-speed manual driving, the amount of information is limited.

2. Digital dashboard as per claim 1,
**characterized in that**
- the dashboard is configured to display visual elements and
- the control (11) is adapted to adjust the elements in number.

3. Digital dashboard as per claim 1 or 2,
**characterized in that**
- the information encompasses notifications and
- the control (11) is adapted to adjust the notifications in number..

4. Digital dashboard as per any of claims 1 through 3,
**characterized in that**
the control (11) is adapted to be set automatically depending on at least one of the following:
- a degree of automation of the vehicle (10) or
- a stress level of a driver of the vehicle (10).

5. Digital dashboard as per any of claims 1 through 4,
**characterized in that**
- the dashboard comprises an illuminated elongate panel.

6. Digital dashboard as per any of claims 1 through 5,
**characterized in that**
- the control (11) is a sliding control (11).

7. Vehicle (10) having a dashboard as per any of claims 1 through 6.

8. Vehicle (10) as per claim 7,
**characterized in that**
- the vehicle (10) further comprises customizable hard keys (12).

9. Vehicle (10) as per claim 7 or 8,
**characterized in that**
- the vehicle (10) further comprises a cradle (13) for tracked devices or gadgets.

## Patentansprüche

1. Digitales Armaturenbrett für ein Fahrzeug (10), aufweisend
- eine manuelle Steuerung (11), die dazu konfiguriert ist, eine Menge an Informationen anzupassen, die durch das Armaturenbrett bereitgestellt werden,
wobei
- die manuelle Steuerung (11) dazu eingerichtet ist, automatisch in Abhängigkeit von einer Fahrtgeschwindigkeit des Fahrzeugs derart eingestellt zu werden, dass bei einer manuellen Fahrt bei hoher Geschwindigkeit die Menge an Informationen begrenzt wird.

2. Digitales Armaturenbrett nach Anspruch 1,
**dadurch gekennzeichnet, dass**
- das Armaturenbrett dazu konfiguriert ist, visuelle Elemente anzuzeigen, und
- die Steuerung (11) dazu eingerichtet ist, die Elemente in der Anzahl anzupassen.

3. Digitales Armaturenbrett nach Anspruch 1 oder 2,
**dadurch gekennzeichnet, dass**
- die Informationen Benachrichtigungen umfassen und
- die Steuerung (11) dazu eingerichtet ist, die Benachrichtigungen in der Anzahl anzupassen.

4. Digitales Armaturenbrett nach einem der Ansprüche 1. % bis 3,
**dadurch gekennzeichnet, dass**
die Steuerung (11) dazu eingerichtet ist, automatisch in Abhängigkeit von mindestens einem der Folgenden eingestellt zu werden
- einem Grad an Automation des Fahrzeugs (10) oder
- einem Stresspegel eines Fahrers des Fahrzeugs (10).

5. Digitales Armaturenbrett nach einem der Ansprüche 1 bis 4,
**dadurch gekennzeichnet, dass**
- das Armaturenbrett eine beleuchtete längliche Tafel umfasst.

6. Digitales Armaturenbrett nach einem der Ansprüche 1 bis 5,
**dadurch gekennzeichnet, dass**
- die Steuerung (11) eine Schiebesteuerung (11) ist.

7. Fahrzeug (10), das ein Armaturenbrett nach einem der Ansprüche 1 bis 6 aufweist.

8. Fahrzeug (10) nach Anspruch 7,
**dadurch gekennzeichnet, dass**
- das Fahrzeug (10) ferner individuell anpassbare Festfunktionstasten (12) umfasst.

9. Fahrzeug (10) nach Anspruch 7 oder 8,
**dadurch gekennzeichnet, dass**
- das Fahrzeug (10) ferner eine Station (13) für nachverfolgte Vorrichtungen oder Geräte umfasst.

## Revendications

1. Tableau de bord numérique pour un véhicule (10), ayant
- une commande manuelle (11) configurée pour ajuster une quantité d'informations fournies par le tableau de bord, dans lequel
- la commande manuelle (11) est adaptée pour être réglée automatiquement en fonction d'une vitesse de déplacement du véhicule de telle sorte que, durant une conduite manuelle à grande vitesse, la quantité d'informations soit limitée.

2. Tableau de bord numérique selon la revendication 1, **caractérisé en ce que**
- le tableau de bord est configuré pour afficher des éléments visuels, et
- la commande (11) est adaptée pour ajuster le nombre des éléments.

3. Tableau de bord numérique selon la revendication 1 ou 2,
**caractérisé en ce que**
- les informations incluent des notifications, et
- la commande (11) est adaptée pour ajuster le nombre des notifications.

4. Tableau de bord numérique selon l'une quelconque des revendications 1 à 3,
**caractérisé en ce que**
la commande (11) est adaptée pour être réglée automatiquement en fonction d'au moins un de ce qui suit :
- un degré d'automatisation du véhicule (10), ou
- un niveau de stress d'un conducteur du véhicule (10).

5. Tableau de bord numérique selon l'une quelconque des revendications 1 à 4,
**caractérisé en ce que**
- le tableau de bord comprend un panneau allongé éclairé.

6. Tableau de bord numérique selon l'une quelconque des revendications 1 à 5,
**caractérisé en ce que**
- la commande (11) est une commande à curseur (11).

7. Véhicule (10), ayant un tableau de bord selon l'une quelconque des revendications 1 à 6.

8. Véhicule (10) selon la revendication 7,
**caractérisé en ce que**
- le véhicule (10) comprend en outre des touches matérielles personnalisables (12).

9. Véhicule (10) selon la revendication 7 ou 8,
**caractérisé en ce que**
- le véhicule (10) comprend en outre un berceau (13) pour des dispositifs ou gadgets suivis.
